Europäisches Patentamt

European Patent Office

Office européen des brevets

(11) Veröffentlichungsnummer: **0 209 638**

**A2**

(12) **EUROPÄISCHE PATENTANMELDUNG**

(21) Anmeldenummer: 86104773.6

(22) Anmeldetag: 08.04.86

(51) Int. Cl.⁴: **B65B 21/04**

(30) Priorität: 30.04.85 DE 3515596

(43) Veröffentlichungstag der Anmeldung:
28.01.87 Patentblatt 87/05

(84) Benannte Vertragsstaaten:
BE DE FR GB IT NL

(71) Anmelder: Max Kettner
Verpackungsmaschinenfabrik GmbH & Co.
KG
Ottobrunner Strasse 1
D-8000 München 83(DE)

(72) Erfinder: Stadler, Siegfried, Dipl.-Ing.
Laubensteinweg 5
D-8210 Prien(DE)
Erfinder: Julinek, Stefan
Finkenweg 8
D-8219 Rimsting(DE)

(74) Vertreter: Dipl.-Ing. Schwabe, Dr. Dr.
Sandmair, Dr. Marx
Stuntzstrasse 16 Postfach 86 02 45
D-8000 München 86(DE)

(54) Fördereinrichtung zum schrittweisen Vorwärtsbewegen von Behältern.

(57) Eine Fördereinrichtung zum schrittweisen Vorwärtsbewegen von auf einer Unterlage (1) stehenden, zu Gruppen geordneten Flaschen (2) weist einen in deren Bewegungsrichtung beweglichen und über diesen angeordneten Schlitten (4) auf, der mittels eines absenkbaren Rechens (7) die Flaschengruppen (2) hintergreifen und vorwärtsbewegen kann. Zur Bewegung des Schlittens (4) ist dieser mit dem Ende eines Schwenkarms (8) verbunden, der seinerseits über eine Kulisse (20) durch einen ständig in Umlauf befindlichen Antrieb angetrieben wird.

Fig.2

## Fördereinrichtung zum schrittweisen Vorwärtsbewegen von Behältern

Die Erfindung betrifft eine Fördereinrichtung zum schrittweisen Vorwärtsbewegen von auf einer Unterlage verschiebbar ruhenden Behältern, bevorzugt zum Aufschieben einer zu einer Verpackungseinheit geordneten Gruppe von Flaschen auf einen Kartonzuschnitt, gemäß dem Oberbegriff des Anspruchs 1.

Bei einer Verpackung von Flaschen werden diese zu Gruppen geordnet an eine Verpackungsmaschine herangeführt, wobei innerhalb der Gruppen die Flaschen jeweils einer Gruppe genau jene Lage einnehmen, die sie auch im geschlossenen Karton einnehmen.

In der Verpackungsmaschine wird an einem Verpackungsplatz jeweils ein aufgefalteter Kartonzuschnitt bereitgelegt, auf dessen dem späteren Kartonboden entsprechenden Abschnitt die Flaschengruppe aufgeschoben wird. Anschließend sorgen Einrichtungen der Verpackungsmaschine für das Auffalten und Schließen des Kartons, das Entfernen des fertiggepackten Kartons und das Bereitlegen eines neuen Kartonzuschnitts an der früher vom vorhergehenden eingenommenen Stelle (s. Patentanmeldung P 34 17 154.1-27).

Die Fördereinrichtung zum Aufschieben der Flaschengruppen auf den Kartonboden weist einen oberhalb der Bewegungsbahn der Flaschen angeordneten Schlitten auf, der längs dieser Bewegungsbahn in Gegenrichtung beweglich ist. Dieser Schlitten ist in einer geeigneten Führung, z.B. zwei sich längs der Bewegungsrichtung erstreckenden Stangen, gelagert. Am Schlitten ist eine pneumatische Absenk-und Hebeeinrichtung angebracht, die einen Rechen trägt, der in der einen Endlage des Schlittens auf der von der Verpackungsmaschine abgewandten Seite der Flaschengruppe diese hintergreift und bei Beginn der Bewegung des Schlittens in Bewegungsrichtung der Flaschengruppe diese ergreift und gegen den Kartonzuschnitt - schiebt. Ist dieser erreicht, dann wird der Rechen so weit angehoben, daß er bei der Rückwärtsbewegung des Schlittens über die nachfolgende Flaschengruppe hinwegläuft, ohne diese zu berühren.

Eine solche Fördereinrichtung weist eine Reihe von Problemen auf: der Schlitten wird beispielsweise durch eine über ein Antriebsritzel laufende Endloskette hin-und herbewegt, kann aber auch beispielsweise mit einem pneumatischen Zylinder zu seiner Hin-und Herbewegung verbunden sein. In jedem Falle ist entweder die mittlere Geschwindigkeit, die der Schlitten während des Zurücklegens seiner Förder-Bewegungsstrecke aufweist, verhältnismäßig niedrig, oder die auftretenden Beschleunigungen sind schwer beherrschbar, ungleichmäßig und zu hoch.

Wird der Schlitten insgesamt zu langsam verfahren, dann ist der Wirkungsgrad der Fördereinrichtung gering, so daß sie die nachfolgende Verpackungsmaschine nicht voll auslasten kann. Ist jedoch die mittlere Geschwindigkeit hinlänglich hoch, dann erfolgt die Beschleunigung zu abrupt, während des Beschleunigens einer Gruppe von Flaschen prallen diese gegeneinander und damit auseinander, und am Ende der Bewegungsstrecke rutschen die Flaschengruppen entweder über den Kartonzuschnitt hinaus oder es fallen sogar einzelne Flaschen um.

Diese Problematik gilt für Flaschen in ganz besonderer Weise, zumal eine Gruppe gefüllter Flaschen ein erhebliches Gewicht aufweist, kann aber auch bei vielen anderen Behältern vorliegen; so kann anstelle einer Gruppe von Behältern auch nur ein einzelner Gegenstand, etwa ein empfindliches elektronisches Gerät, durch eine Fördereinrichtung der eingangs genannten Art vorangeführt werden, welches ebenfalls möglichst rasch gefördert werden sollte, ohne daß hohe Beschleunigungen auftreten.

Moderne Verpackungsmaschinen sind so universell eingerichtet oder so leicht umstellbar, daß sie unterschiedliche Kartongrößen verpacken können. Dementsprechend muß auch die dieser Verpackungsmaschine vorgeschaltete Fördereinrichtung imstande sein, unterschiedlich große Gebinde zu fördern bzw. umzusetzen, d.h., der Förderhub der Fördereinrichtung muß in seiner Länge einstellbar sein.

Zu diesem Zwecke waren bisher längs der Bewegungsbahn des Schlittens verstellbare Endschalter angebracht, gegen die der Schlitten in der jeweils gewünschten Endlage anliegt. Hierbei war zwar in weiten Grenzen mit einfachsten Mitteln eine gute Einstellbarkeit gegeben, es mußten aber gerade wegen dieser Einstellbarkeit stets die oben erwähnten Nachteile in Kauf genommen werden.

Ausgehend von diesem Stand der Technik liegt der Erfindung die Aufgabe zugrunde, die eingangs genannte Fördereinrichtung dahingehend weiterzubilden, diese Nachteile zu vermeiden und möglichst unter Wahrung der guten Einstellbar keit der Endlagen des Bewegungsweges des Schlittens dessen Bewegung so zu steuern, daß die Beschleunigung bzw. Verzögerung an den Enden seines Bewegungsweges in genau definierbarer Weise allmählich erfolgt, während insgesamt die mittlere Geschwindigkeit des Schlittens erhöht ist, um somit ein rasches, aber dennoch schonendes Umsetzen von Behältern, insbesondere von Flaschengruppen, zu ermöglichen.

Diese Aufgabe wird durch die Merkmale des Kennzeichen des Anspruchs 1 gelöst.

Hierbei ist ein Schwenkarm vorgesehen, dessen eines Ende ortsfest, d.h. gegenüber dem der Fördereinrichtung zugeordneten Maschinengestell unbeweglich, angebracht ist. Das Ende dieses Schwenkarmes ist mit dem Schlitten verbunden, so daß bei einer Schwenkbewegung des Schwenkarmes von einer seiner Endlagen in die andere gleichzeitig der Schlitten eine Bewegung von der einen seiner Endlagen in die andere durchführt.

Als Antrieb ist eine in Form einer geschlossenen Bahnkurve ausgebildete Kulisse vorgesehen, in der ein Kulissenstein ständig umläuft. Dieser Kulissenstein, der bevorzugt als Rolle ausgebildet ist, ist einerseits mit einem Antrieb und andererseits mit dem Schwenkarm verbunden. Hierbei ist die die Kulisse bildende Bahnkurve so angeordnet und ausgebildet, daß der Schwenkarm, wenn der Kulissenstein einen vollen Umlauf durchführt, seinerseits eine volle Oszillationsbewegung, also Hin-und Rückbewegung, und mithin auch der Schlitten eine volle Hin-und Rückbewegung über seine gesamte Bewegungsstrecke durchführt. Wesentlich ist hierbei der Umstand, daß sich der Kulissenstein in ständiger Bewegung befindet, so daß der diesem zugeordnete Antrieb deshalb, weil er ständig läuft, nicht jene Stöße und ungenauen Beschleunigungsspitzen liefert, die ein sonstiger Antrieb dann liefert, wenn er ständig an-und abgeschaltet wird. Die Bahnkurve ist unter Berücksichtigung der geometrischen Verhältnisse bei der Verbindung des Kulissensteins mit dem Schwenkarm und des Schwenkarms mit dem Schlitten so ausgebildet, daß eine sanfte, zunehmend kräftigere und dann gleichbleibende Beschleunigung bis zu einer Spitzengeschwindigkeit erfolgt, die dann erreicht wird, wenn sich der Schlitten etwa in der Mitte seines Bewegungsweges befindet. Von dort aus sorgt die Bahnkurve für eine allmähliche, dann sanft endende Verzögerung, so daß der Schlitten sanft und allmählich zum Stillstand kommt.

Da sich der mit dem Kulissenstein verbundene Antrieb in ständigem Umlauf befindet, dient das Massenträgheitsmoment aller bewegten Teile zum raschen und gleichmäßi gen Beschleunigen der Flaschengruppen auch dann, wenn diese sehr - schwer sein sollten oder wenn durch Verschmutzung der Unterlage örtlich eine höhere Reibung zwischen diesen und der Unterlage vorliegen sollte.

Die erfindungsgemäße Vorrichtung ist insbesondere zum Umsetzen jeweils einer Flaschengruppe in eine Verpackungsmaschine vorgesehen, kann aber ebensogut auch andere Gegenstände umsetzen, z.B. empfindliche elektronische Geräte, die stoßfrei, aber dennoch möglichst rasch einer weiterverarbeitenden Einrichtung zugeführt werden müssen.

Die Kulisse ist als ortsfeste Kurve ausgebildet. Es ist aber möglich, jeder Art von umzusetzenden Behältern, falls erforderlich, eine eigene Kulisse zuzuordnen, gemäß welcher Anfang und Ende der Bewegungsstrecke des Schlittens, aber auch der Verlauf der Beschleunigung des Schlittens unterschiedlich bewirkt werden. Hierbei ist es zweckmäßig, auswechselbare Kulissenplatten vorzusehen; es können aber auch alle Kulissenbahnen übereinanderliegend angeordnet sein, wobei an den Kreuzungs-und Verzweigungsstellen Weichenstücke dafür sorgen, daß die jeweils benötigte Kulisse eingehalten wird.

Es ist schließlich möglich, zum Ändern z. B. des Anfangs und Endes des Bewegungsweges des Schlittens den Schwenkpunkt des Schwenkarms verstellbar auszubilden, wobei dieser Schwenkpunkt somit letztlich nur bei Betrieb der Vorrichtung ortsfest, sonst aber verstellbar ist.

Der Kulissenstein kann z.B. durch eine Rollenkette angetrieben werden, die innerhalb der Kulisse verläuft und dort über ein Kettenritzel hinwegläuft, wobei der Kulissenstein etwa von einer Rolle der Rollenkette gebildet ist. Der Vorteil dieser Anordnung liegt im einfachen Aufbau, der Nachteil in der hohen Reibung und der verhältnismäßig geringen Belastbarkeit des Kulissensteins.

Es ist auch möglich, den Kulissenstein mit einem Vorsprung zu versehen, der zwischen den beiden Schenkeln eines Gabelstücks aufgenommen ist, das um einen in der Mitte der Bahnkurve der Kulisse gelegenen Drehpunkt rotiert. In diesem Fall tritt jedoch an der Eingriffsstelle zwischen dem Gabelstück und dem Kulissenstein eine verhältnismäßig hohe Reibung auf.

Es wird daher gemäß einer weiteren Ausgestaltung der Erfindung vorgeschlagen, daß eine angetriebene Kurbel vorgesehen ist, deren Drehachse ortsfest ist und bevorzugt innerhalb der die Kulisse bildenden Bahnkurve liegt.

Das freie Ende des Kurbelarmes ist gemäß dieser Ausgestaltung durch einen Lenker mit dem Kulissenstein verbunden, wobei bevorzugt der Lenker auf Zug belastet ist, der Kurbelarm also beim Umlauf der Kurbel stets dem Kulissenstein voreilt. Bei dieser Ausgestaltung der Erfindung läßt sich ein besonders reibungsarmer und damit auch - schwingungs-und erschütterungsarmer Lauf des Kulissensteines erzielen.

Der Kulissenstein könnte z.B. mit dem Schwenkarm ebenfalls durch einen eigenen Lenker verbunden sein, dessen Enden schwenkbar am Kulissenstein sowie am Schwenkarm angebracht sein könnten. Gemäß einer Ausgestaltung der Erfindung ist es aber besonders von Vorteil, den zwischen dem Ende der Antriebskurbel und dem Kulissenstein vorgesehenen Lenker als Dreieckslenker auszubilden, dessen dritte Anlenkung dem Schwenkarm zugeordnet ist. Da die Lage des Dreiecklenkers festliegt, muß die dritte Anlenkung längs des Schwenkarmes verstellbar sein. Zu diesem Zweck könnte eine den Schwenkarm umgreifende und längs dessen Erstreckung verschiebliche Hülse vorgesehen sein, an welcher die dritte Anlenkung des Dreiecklenkers angebracht ist. Gemäß einer Ausgestaltung der Erfindung ist es aber von Vorteil, daß an der dritten Anlenkung ein bevorzugt als Rolle ausgebildetes Führungsstück angelenkt ist, das innerhalb einer im Schwenkarm ausgebildeten Längsnut verschieblich ist.

Der besondere Vorteil dieser Ausgestaltung besteht darin, daß der Dreieckslenker je nach Wahl der Abstände seiner Anlenkpunkte dazu verwendet werden kann, stark unterschiedliche Ausschläge des Schwenkarmes zu erreichen. Es ist somit möglich, durch Auswechseln des ein sehr einfaches Bauteil bildenden Dreieckslenkers in der Länge stark unterschiedliche Bewegungsstrecken des Schlittens zu ermöglichen, ohne daß deshalb, wie früher, ein entsprechend längerer und damit auch aufwendigerer Antrieb erforderlich wäre.

Hierbei ermöglicht die Führung des Führungsstückes in einer Nut des Schwenkarmes einen gedrängten und raumsparenden Aufbau.

Es wäre grundsätzlich möglich, den Kulissenstein mit einem Zapfen zu versehen, der dann seinerseits in der Längsnut des Schwenkarmes läuft und diesen führt. Die Verwendung eines Dreieckslenkers läßt aber gegenüber dieser einfachen Ausführungsform nicht nur die Über-oder Untersetzung der Schwenkbewegung durch Einbau eines entsprechend dimensionierten Lenkers zu, sondern der Schwenkarm kann, obwohl von einer mit nur verhältnismäßig schwachen und stetigen Krümmungen versehenen Kulisse gesteuert, Bewegungen durchführen, die bei unmittelbarer Verbindung zwischen Kulissenstein und Schwenkarm eine Kulisse mit wesentlich stärkeren und abrupteren Krümmungen erforderlich machen würde. Somit trägt diese Ausgestaltung der Erfindung wiederum dazu bei, daß ein sehr großer Teil des Antriebs nur verhältnismäßig geringen Beschleunigungskräften ausgesetzt ist und somit der gesamte Antrieb weich und stetig erfolgt, wobei die Schwungmasse des gesamten Antriebes verwendet werden kann, um eine möglichst kontrollierte Beschleunigung und Verzögerung zu ermöglichen.

Die Kulisse kann verhältnismäßig klein ausgeführt werden, so daß sich der Dreiecklenker in den Endlagen des Schwenkarmes innerhalb dessen Bewegungsbereiches befindet. Gemäß einer Ausgestaltung der Erfindung ist es aber besonders von Vorteil, daß eine besonders große Bahnkurve bzw. Führungskulisse verwendet ist, so daß sich in den beiden Endlagen des Schwenkarmes jeweils der Dreieckslenker außerhalb dessen Bewegungsbereiches befindet. Der besondere Vorteil dieser Ausgestaltung liegt darin, daß die verhältnismäßig große Kulisse nur einer verhältnismäßig geringen Belastung und somit Abnutzung unterliegt und andererseits aber verhältnismäßig hohe Massenkräfte vorliegen, so daß die oben auf die Massenkräfte zurückgeführten Vorteile bei dieser Ausgestaltung der Erfindung noch in verstärktem Maße hervortreten.

Die Verbindung zwischen dem Ende des Schwenkarmes und dem Schlitten könnte ebenfalls durch unmittelbaren Eingriff erfolgen, wobei etwa ein am Schlitten vorstehender Zapfen in ein entsprechendes Langloch oder eine Nut im Schwenkarm eingreift. Gemäß einer weiteren Ausgestaltung der Erfindung ist aber das Ende des Schwenkarmes mit dem Schlitten über eine Zugstange verbunden, welche an beiden Teilen gelenkig angebracht ist. Diese Zugstange ist als Pleuel wirksam und wird somit auch in Gegenrichtung, also auf Druck, beansprucht. An dieser Seite der Antriebskette ist es aber zweckmäßig, das Gewicht möglichst zu reduzieren, damit die oszillierenden Massen möglichst klein gehalten werden. Deshalb sollte die Anordnung so getroffen werden, daß die Zugstange dann, wenn der am Schlitten angebrachte Rechen mit einer Flaschengruppe in Eingriff steht, auf Zug belastet wird.

Eine ganze Reihe von Maßnahmen bewirkt die Einstellung des Schlittenhubes. Ein Teil dieser Maßnahmen ist bereits oben erwähnt. Gemäß einer Ausgestaltung der Erfindung ist es aber besonders von Vorteil, wenn zu diesem Zweck die Lage der Schwenkpunkte der Zugstange verstellbar ausgebildet ist, und zwar bevorzugt längs einer am Ende des Schwenkarmes angeordneten Stellkurve. Längs dieser Stellkurve, die bevorzugt als Langloch oder Nut ausgebildet ist, ist der Anlenkpunkt für das Ende der Zugstange feststellbar verschieblich, so daß durch Einstellung der Lage des Schwenkpunktes der Schlittenhub bzw. dessen Endlagen einstellbar sind.

Gemäß einer Ausgestaltung der Erfindung ist die Stellkurve als Kreisbogen ausgebildet, welcher dann, wenn der Schwenkarm eine Mittellage zwischen seinen beiden Endlagen aufweist, jenen Schwenkpunkt als Mittelpunkt hat, der zwischen der Zugstange und dem Schlitten gebildet ist. Durch diese Ausgestaltung wird bei einer Verstellung der Lage des Anlenkpunktes für die Zugstange an der Stellkurve das vordere wie auch hintere Ende der Bewegungsstrecke des Schlittens in gleicher Weise auseinander oder zusammen gerückt.

Es wäre schließlich auch noch möglich, die Stellkurve ihrerseits schwenkbar am Ende des Schwenkarmes anzubringen, so daß das eine Ende der Bewegungsstrecke des Schlittens nach einem Einstellvorgang um ein anderes Maß verstellt wird als das andere Ende oder bevorzugt das vordere Ende in der Lage unveränderlich bleibt. Die gesamte Geometrie des beschriebenen Antriebes ist definiert, so daß, ausgehend von einer gewünschten Beschleunigungs-und Verzögerungscharakteristik der durch die Fördereinrichtung umgesetzten Flaschen oder Gegenstände die zugehörige Geometrie durch einen Rechner ohne weiteres errechnet werden kann. Die genaue Auslegung der Bahnkurve, die Dimensionierung des Dreieckslenkers und dergleichen sind somit dem Fachmann ohne weiteres möglich.

Der Gegenstand der Erfindung wird anhand der beigefügten, schematischen Zeichnung noch näher beschrieben. In dieser zeigen:

Fig. 1 eine schematische Darstellung der erfindungsgemäßen Fördereinrichtung,

Fig. 2 eine Draufsicht auf die Fördereinrichtung nach Fig. 1, und

Fig. 3 einen Schnitt durch wesentliche Teile der in Fig. 1 und 2 gezeigten Fördereinrichtung.

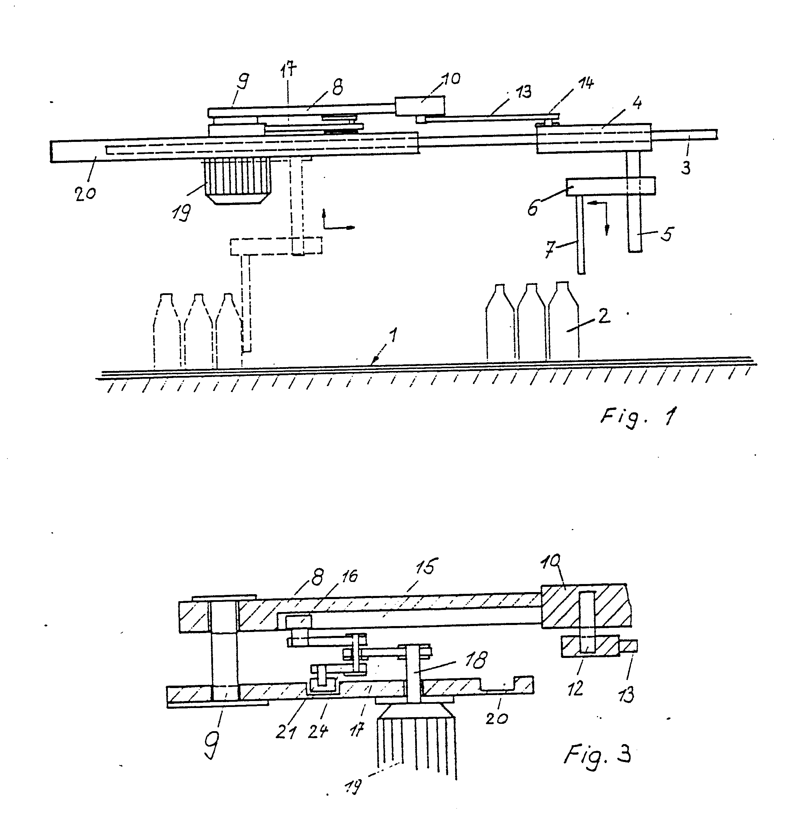

In Fig. 1 ist eine Unterlage 1 gezeigt, auf welcher in Reihen und Spalten geordnete Flaschengruppen 2 aufgestellt sind, welche sich in Pfeilrichtung, also in der Bildebene, bewegen sollen.

Oberhalb der Unterlage 1 und parallel zu dieser sowie zur Bewegungsrichtung der Flaschengruppen 2 sind zwei sich parallel zueinander erstreckende Führungsstangen 3 angebracht, auf denen ein Schlitten 4 längsverschieblich und in Gegenrichtungenbeweglich angebracht ist. An der Unterseite des Schlittens 4 befindet sich eine Vertikalführung 5, an der ein vertikal ab-und aufwärts beweglicher Schieber 6 befestigt ist, der durch eine in der Zeichnung nicht gezeigte Antriebseinrichtung, etwa einem pneumatischen Kolben, in Pfeilrichtung verschoben werden kann.

Das in Bewegungsrichtung der Flaschengruppen 2 weisende Ende des Schiebers 6 trägt einen Rechen 7, der die Flaschen einer Gruppe in Pfeilrichtung verschieben kann.

Wie aus Fig. 1 ersichtlich, befindet sich die rechte, ausgezogen gezeichnete Flaschengruppe 2 in der Ausgangslage; der über der Hinterkante der Flaschengruppe 2 befindliche Schieber 6 befindet sich zusammen mit seinem Rechen 7 in angehobener Lage, kann jetzt aber abgesenkt werden. Nachdem Schieber 6 und Rechen 7 abgesenkt wurden, ergreift der Rechen 7 die rückwärtige Seite der Flaschengruppe 2 und verschiebt diese in Pfeilrichtung, wie in Fig. 1 gestrichelt gezeigt, und zwar bis in eine (in der Zeichnung nicht gezeigte) Endlage, in welcher sich die Flaschengruppe 2 genau auf dem für den Boden eines Kartons bestimmten Flächenabschnitts eines Kartonzuschnitts befindet - (s. P 34 17 154.1-27).

Oberhalb und vor dem Schlitten 4 ist ein insgesamt quer zu den Führungsstangen 3 gelagerter Schwenkarm 8 ange bracht, der in einer horizontalen Ebene schwenkbar ist. Wo genügend Bauhöhe zur Verfügung steht, kann dieser Schwenkarm 8 auch in einer vertikalen Ebene schwenkbar sein.

Das vom Schlitten 4 abgewandte Ende des Schwenkarmes 8 ist an einem ortsfesten Schwenkbolzen 9 schwenkbar angebracht, dessen Lage so gewählt ist, daß sich der Schwenkarm 8 mit seinem freien Ende während der Durchführung seiner Schwenkbewegung weitgehend oberhalb der beiden Stangen 3 befindet.

Am freien Ende des Schwenkarmes 8 ist ein Schwenkkurventeil 10 angebracht, in welchem eine kreisbogenförmige Nut 11 ausgebildet ist. In dieser Nut 11 ist verschieblich, aber feststellbar eine Anlenkung 12 angeordnet, die mit dem einen Ende einer Zugstange 13 schwenkbar und deren anderes Ende mit einem, Schwenkzapfen 14 verbunden ist, der bezüglich der Bewegungsrichtung des Schlittens 4 mittig und oberhalb von diesem an seiner Vorderseite angebracht ist.

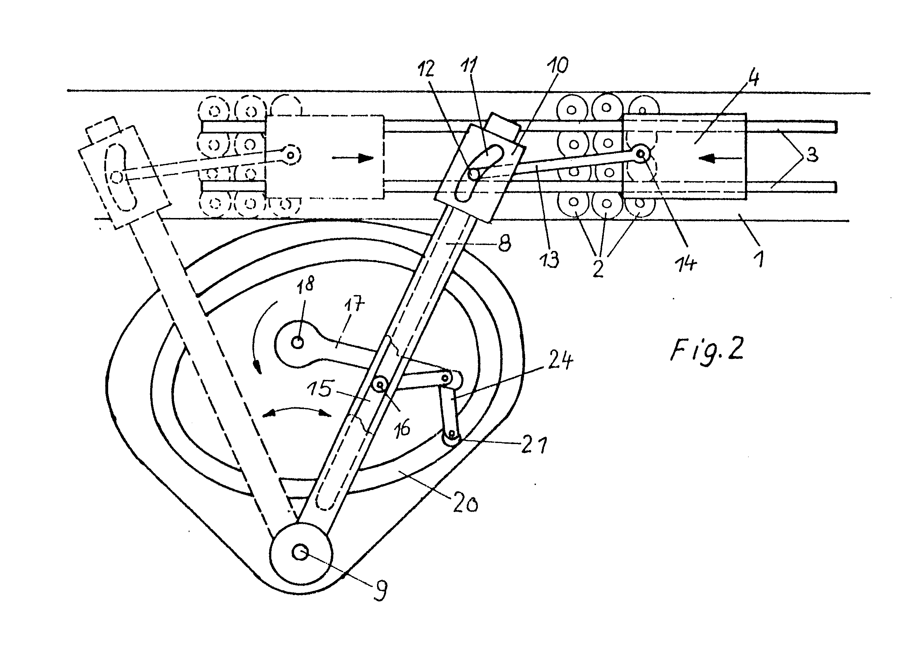

Wie ersichtlich, führt die Schwenkbewegung des Schwenkarmes aus der in Fig. 2 rechts liegenden, ausgezogen gezeigten hinteren Endlage in die gestrichelt gezeigte vordere Endlage dazu, daß der angelenkte Schlitten 4 seinerseits einen vollen Hub zwischen seinen beiden Endlagen durchführt.

Die vordere Endlage des Schlittens ist gestrichelt gezeigt. Die Krümmung der Steuerkurve 12 ist so ausgebildet, daß in dieser vorderen, gestrichelt gezeigten Endlage die Kurve 12 einen Kreisbogen bildet, dessen Mitte vom Schwenkzapfen 14 am Schlitten 4 gebildet ist.

Längs des neben der Steuerkurve 11 gezeigten Pfeiles ist es möglich, die Anlenkung 12 an der Steuerkurve 11 zu verschieben und festzulegen. Liegt die Anlenkung 12 am unteren Ende der Steuerkurve 11, dann verkürzt sich der Bewegungsweg des Schlittens 4; liegt er am oberen Ende der Steuerkurve 11, dann verlängert sich der Bewegungsweg des Schlittens 4. In jedem Falle bleibt die vordere Endlage des Schlittens 4 gleich. Dies ist dann von Vorteil, wenn die vordere Endlage stets auf die benachbarte, in der Zeichnung nicht gezeigte Verpackungsmaschine abgestimmt ist.

Zum Antrieb des Schwenkarmes 8 weist dieser eine Längsnut 15 auf, in der eine Führungsrolle 16 in Längsrichtung des Schwenkarmes 8 verschieblich aufgenommen ist.

Der Antrieb weist ferner eine Kurbel 17 auf, die in Pfeilrichtung um eine nur schematisch gezeigte Achse 18 drehbar ist, welche von der Welle beispielsweise eines Motors 19 gebildet ist.

Unterhalb der Kurbel 17 verläuft, diese im wesentlichen umgebend, eine Kulisse 20, die die Form einer geschlossenen Bahnkurve aufweist. In dieser Kulisse 20 ist zum Umlauf eine Rolle 21 angebracht.

Ein Dreieckslenker 24 weist drei Anlenkungspunkte auf, von denen der Scheitelpunkt am freien Ende des Armes der Kurbel 17 angelenkt ist, während die beiden anderen, die Basis des Dreieckslenkers begrenzenden Anlenkpunkte jeweils die Rollen 16 und 21 tragen.

Es ist ersichtlich, daß eine Umdrehung der Kurbel 17 in Pfeilrichtung die einen Kulissenstein bildende Rolle 21 veranlaßt, in der Kulisse 20 eine geschlossene Bahnkurve zurückzulegen. Im Verlauf dieser Bahnkurve wird über die Führungsrolle 16, die in die Längsnut 15 im Schwenkarm 4 eingreift, dieser aus der ausgezogenen in die gestrichelte Lage und aus dieser wieder zurück bewegt.

Wie aus Fig. 3 ersichtlich, ist die gesamte Anordnung so geschachtelt, daß sie eine nur sehr geringe Bauhöhe aufweist.

Wie aus Fig. 2 ersichtlich, befinden sich der Schwenkpunkt 9 und die Drehachse 18 auf einer gemeinsamen, sich senkrecht zur Bewegungsrichtung der Flaschengruppen 2 erstreckenden Achse, welche den Schlitten 4 in dessen vorderster Lage - schneidet.

Die Kulisse braucht nicht einer symmetrischen Bahnkurve zu entsprechen, sondern kann asymmetrisch ausgebildet sein, so daß etwa der Schlitten seine Rückbewegung, in welcher er keine Flaschen verschiebt, rascher zurücklegt als seine Vorwärtsbewegung, bei der eine bestimmte Beschleunigung nicht überschritten werden darf, so daß insgesamt die für einen Abaufzyklus erforderliche Zeit verkürzt wird.

Durch Verwendung eines geschwindigkeitsregelbaren Motors kann die Hubzahl in der Leiteinheit variiert und damit unterschiedlichen Aufgaben angepaßt werden.

## Ansprüche

1. Fördereinrichtung zum schrittweisen Vorwärtsbewegen von auf einer Unterlage verschiebbar ruhenden Behältern, bevorzugt zum Aufschieben einer zu einer Verpackungseinheit geordneten Gruppe von Flaschen auf einen Kartonzuschnitt,

a) mit einem oberhalb der Bewegungsbahn der Behälter angebrachten, längs dieser Bewegungsbahn in entgegengesetzten Richtungen verschiebbaren und mit einer Antriebseinrichtung verbundenen Schlitten, und

b) mit einem zum Eingriff mit den Behältern nach unten absenkbaren und wieder anhebbaren, von dem Schlitten getragenen Rechen,

**dadurch gekennzeichnet, daß**

c) der Antrieb einen ortsfest gelagerten (Schwenkpunkt 9) Schwenkarm (8) aufweist,

1. dessen Ende an den Schlitten (4) angelenkt ist, und

2. der mit einem bevorzugt als Rolle ausgebildeten Kulissenstein (21) verbunden ist,

d) der in einer eine geschlossene Umlaufbahn bildenden Kulisse (20) geführt ist.

2. Einrichtung nach Anspruch 1, dadurch gekennzeichnet, daß der Kulissenstein (21) über einen Lenker (24) mit dem Ende des Arms einer um eine ortsfeste Achse (18) drehbaren, angetriebenen Kurbel (17) verbunden ist.

3. Einrichtung nach Anspruch 2, dadurch gekennzeichnet, daß der Lenker als Dreieckslenker - (24) ausgebildet ist, dessen dritte Anlenkung mit einem Führungsstück (16) verbunden ist.

4. Einrichtung nach Anspruch 3, dadurch gekennzeichnet, daß das als Rolle ausgebildete Führungsstück (16) in einer Längsnut (15) am Schwenkarm (8) geführt ist.

5. Einrichtung nach Anspruch 3 oder 4, dadurch gekennzeichnet, daß sich der Dreieckslenker (24) in den Endlagen des Schwenkarms (8) außerhalb dessen Bewegungsbereiches befindet.

6. Einrichtung nach einem der Ansprüche 1 bis 5, dadurch gekennzeichnet, daß das Ende des Schwenkarms (8) und der Schlitten (4) über eine Zugstange (13) verbunden sind.

7. Einrichtung nach Anspruch 6, dadurch gekennzeichnet, daß am Ende des Schwenkarms (8) eine Stellkurve (11) angeordnet ist, längs der die Anlenkung (12) für den Schwenkarm (13) verstellbar ist.

8. Einrichtung nach Anspruch 7, dadurch gekennzeichnet, daß die Stellkurve (11) als Kreisbogen ausgebildet ist, dessen Mittelpunkt bevorzugt mit dem Anlenkungspunkt zwischen Zugstange - (13) und Schlitten (4) zusammenfällt, wenn sich dieser an einer bestimmten Stelle, vorzugsweise der Mitte oder dem vorderen Ende seiner Bewegungsbahn, befindet.

9. Einrichtung nach einem der Ansprüche 1 bis 8, dadurch gekennzeichnet, daß die Kulisse (20) horizontal angeordnet ist.

10. Einrichtung nach einem der Ansprüche 1 bis 9, dadurch gekennzeichnet, daß die Kulissenkurve so ausgelegt ist, daß der Schwenkarm (8) in seinen Umlenkpunkten kurzzeitig zum Stillstand kommt und die Beschleunigungen ruck-und stoßfrei erfolgen.

Fig. 1

Fig. 3

Fig.2